# EUROPEAN PATENT APPLICATION

(11) **EP 4 589 450 A1**
(43) Date of publication of application: **23.07.2025**
(21) Application number: 23865129.3
(22) Date of filing: 04.08.2023
(51) Int. Cl.: G06F 16/58, G01N 21/88, G06F 16/53, G06Q 50/04

(54) **INFORMATION PROCESSING DEVICE, INFORMATION PROCESSING METHOD, PROGRAM, INFORMATION DISPLAY DEVICE, AND INFORMATION DISPLAY METHOD**

(30) Priority: 12.09.2022 JP 2022144437
(71) Applicant: FUJIFILM Corporation, Tokyo 106-8620 (JP)
(72) Inventor: IKEDA, Haruka, Tokyo 106-8620 (JP)
(74) Representative: Meissner Bolte Partnerschaft mbB
(86) International application number: PCT/JP2023/028555
(87) International publication number: WO 2024/057769

(57) **Abstract**

An information processing apparatus includes at least one processor. The at least one processor is configured to select, as an access target image, an image to which attribute information that is the same as designated attribute information is assigned from among a plurality of images to each of which attribute information is assigned, the designated attribute information being attribute information that is designated; and present access means for accessing the access target image.

## Description

### BACKGROUND OF THE INVENTION

### 1. Field of the Invention

The disclosed technology relates to an information processing apparatus, an information processing method, a program, an information display device, and an information display method.

### 2. Description of the Related Art

The following techniques are known as techniques related to image data management systems. For example, JP2021-26330A describes an inspection result management server having management means for managing predetermined identification information that can be provided by an information providing source and previous image data of a structure associated with the information providing source, the predetermined identification information and the previous image data being managed in association with each other, receiving means for receiving, via a communication network, the identification information transmitted from a communication terminal that has acquired the identification information from the information providing source, and creation means for creating a screen used for displaying, on the communication terminal via the communication network, the previous image data of the structure corresponding to the identification information received by the receiving means.

JP1995-113762A (JP-H7-113762A) describes an inspection measurement apparatus including imaging means for performing imaging on an object to be inspected, recording means for recording an inspection image obtained by the imaging means and inspection information related to the inspection image, display means for displaying the inspection image recorded in the recording means, and inspection image search means for searching for an inspection image corresponding to the inspection information by designating a portion of the inspection information recorded in the recording means to display the inspection image on the display means.

JP2002-269109A describes a thin-film device manufacturing process management system including a database that stores, in association with one another, product names of thin-film devices, names of manufacturing processes, wafer numbers, foreign object and defect distributions detected by an inspection apparatus, keywords indicating features of the foreign object and defect distributions, foreign object and defect images captured based on inspection data, keywords indicating features of the foreign object and defect images, and countermeasures against foreign objects and defects; means for receiving input of a foreign object and defect distribution keyword and a foreign object and defect image keyword and input of a search logical expression using a plurality of keywords by an operator; means for searching the database in accordance with input search conditions to determine whether a corresponding previous case exists; and means for displaying a search result.

### SUMMARY OF THE INVENTION

A manufacturing process of an industrial product may involve an inspection of a target object using a captured image of the target object (hereinafter referred to as image inspection). For example, non-destructive inspection for determining the presence or absence of a defect in a product by using a radiographic image is performed. The image inspection is performed a plurality of times until a product is completed. In some cases, imaging may be performed on different sites of a single individual unit or from different imaging directions. When a single product is constituted by a plurality of components, the image inspection is performed on each of the plurality of components, and the image inspection is further performed on a finished product into which the plurality of components are assembled. As described above, in a case where the image inspection is performed on each component a plurality of times and on each product a plurality of times, a large number of images (hereinafter referred to as inspection images) are acquired in each inspection step, and a desired inspection image is difficult to access. For example, when inspection images of different sites of the same individual unit captured in a certain inspection step are to be compared and when inspection images acquired in a plurality of inspection steps performed on the same individual unit are to be compared, it is desirable to easily access a target inspection image.

The disclosed technology has been made in view of the foregoing points, and an object thereof is to facilitate access to a desired image.

An information processing apparatus according to the disclosed technology includes at least one processor. The at least one processor is configured to select, as an access target image, an image to which attribute information that is the same as designated attribute information is assigned from among a plurality of images to each of which attribute information is assigned, the designated attribute information being attribute information that is designated; and present access means for accessing the access target image.

The at least one processor may be configured to receive, as the designated attribute information, attribute information assigned to an image being displayed on a display. The at least one processor may be configured to receive an input of designation of attribute information as the designated attribute information.

The plurality of images may be inspection images acquired in an inspection step performed on a target object included in the images. The attribute information may include information for identifying an inspection step in which the images are acquired. The attribute information may further include at least one of information for identifying an individual unit of a component or a product that is the target object, information for identifying an individual unit of a product manufactured using a component that is the target object, information for identifying respective individual units of a plurality of components constituting a product that is the target object, information for identifying a manufacturing lot of a component or a product that is the target object, information for identifying a site of the target object, information for identifying an imaging direction of the images, or an imaging date of the images.

The at least one processor may be configured to select a plurality of inspection images including different sites acquired for the same individual unit in the same inspection step, as access target images each being the access target image, based on the attribute information. The at least one processor may be configured to arrange and present a plurality of the access means, each corresponding to one of a plurality of the access target images, in an order corresponding to sites of a target object included in the access target images.

The at least one processor may be configured to select a plurality of inspection images acquired for the same individual unit from different imaging directions in the same inspection step, as access target images each being the access target image, based on the attribute information. The at least one processor may be configured to present the access means for accessing a plurality of the access target images in an order corresponding to the imaging directions.

The at least one processor may be configured to select a plurality of inspection images acquired for the same individual unit in a plurality of inspection steps performed at different timings, as access target images each being the access target image, based on the attribute information. The at least one processor may be configured to select a plurality of inspection images acquired for the same individual unit in inspection steps performed before and after a specific step, as access target images each being the access target image, based on the attribute information.

The at least one processor may be configured to select each of an inspection image acquired for an individual unit of a first component identified by the designated attribute information, an inspection image acquired for an individual unit of a second component to be used in combination with the individual unit of the first component, and an inspection image acquired for an individual unit of a product manufactured using the first component and the second component, as the access target image, based on the attribute information. The at least one processor may be configured to select each of an inspection image acquired for an individual unit of a product identified by the designated attribute information and inspection images acquired for respective individual units of a plurality of components constituting the individual unit of the product, as the access target image, based on the attribute information. The at least one processor may be configured to classify and present a plurality of the access means, each corresponding to one of a plurality of the access target images, according to components and according to inspection steps. The at least one processor may be configured to arrange and present the plurality of access means, each corresponding to one of the plurality of access target images, in chronological order of the inspection steps.

The at least one processor may be configured to select the access target image based on a priority set in the attribute information. The at least one processor may be configured to change a presentation form of a plurality of access means, each corresponding to one of a plurality of the access target images, according to a priority set in the attribute information.

An information processing method according to the disclosed technology includes selecting, as an access target image, an image to which attribute information that is the same as designated attribute information is assigned from among a plurality of images to each of which attribute information is assigned, the designated attribute information being attribute information that is designated; and presenting access means for accessing the access target image.

A program according to the disclosed technology is a program for causing at least one processor that an information processing apparatus has to execute processing including selecting, as an access target image, an image to which attribute information that is the same as designated attribute information is assigned from among a plurality of images to each of which attribute information is assigned, the designated attribute information being attribute information that is designated; and presenting access means for accessing the access target image.

An information display device according to the disclosed technology causes a display to display access means for accessing an image to which attribute information that is the same as designated attribute information is assigned among a plurality of images to each of which attribute information is assigned, the designated attribute information being attribute information that is designated.

An information processing method according to the disclosed technology displays, on a display, access means for accessing an image to which attribute information that is the same as designated attribute information is assigned among a plurality of images to each of which attribute information is assigned, the designated attribute information being attribute information that is designated.

The disclosed technology can facilitate access to a desired image.

### BRIEF DESCRIPTION OF THE DRAWINGS

Fig. 1 is a diagram illustrating an example configuration of an image management system according to an embodiment of the disclosed technology;
Fig. 2 is a diagram illustrating an example structure of a data file of an inspection image handled by the image management system according to an embodiment of the disclosed technology;
Fig. 3 is a diagram illustrating an example hardware configuration of an image viewing apparatus according to an embodiment of the disclosed technology;
Fig. 4 is a functional block diagram illustrating an example functional configuration of an image viewing apparatus according to an embodiment of the disclosed technology;
Fig. 5 is a diagram illustrating an example of the presentation form of access means according to an embodiment of the disclosed technology;
Fig. 6 is a flowchart illustrating an example of the flow of a process implemented by executing an access support program according to an embodiment of the disclosed technology;
Fig. 7A is a diagram illustrating an example of a method for capturing a radiographic image acquired in non-destructive inspection of a metal product;
Fig. 7B is a diagram illustrating an example of the presentation form of access means in a case where a first limited access request is received according to an embodiment of the disclosed technology;
Fig. 8A is a diagram illustrating an example of a method for capturing a radiographic image acquired in non-destructive inspection of a metal product;
Fig. 8B is a diagram illustrating an example of the presentation form of access means in a case where a second limited access request is received according to an embodiment of the disclosed technology;
Fig. 8C is a diagram illustrating an example of the presentation form of access means in a case where the second limited access request is received according to an embodiment of the disclosed technology;
Fig. 9 is a diagram illustrating an example of an inspection process flow performed on the same individual unit of a component or a product;
Fig. 10 is a diagram illustrating an example of a manufacturing process flow including inspection steps performed on the same individual unit of a component or a product;
Fig. 11 is a diagram illustrating an example of the presentation form of access means in a case where a fifth limited access request is received according to an embodiment of the disclosed technology;
Fig. 12A is a diagram illustrating an example of the presentation form of access means according to an embodiment of the disclosed technology; and
Fig. 12B is a diagram illustrating an example of the presentation form of access means according to an embodiment of the disclosed technology.

### DESCRIPTION OF THE PREFERRED EMBODIMENTS

An example of embodiments of the disclosed technology will be described hereinafter with reference to the drawings. In the drawings, identical or equivalent elements and portions are denoted by the same reference numerals, and redundant description will be omitted.

### First Embodiment

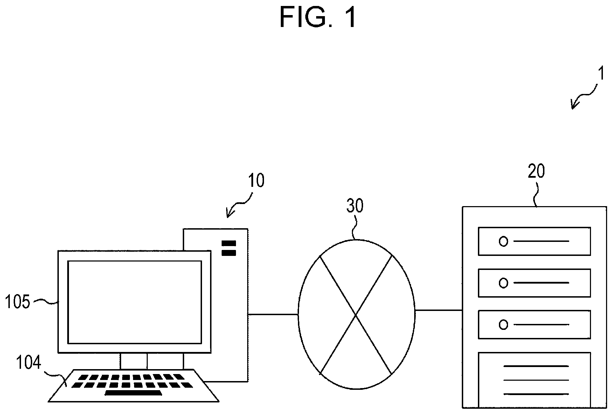

Fig. 1 is a diagram illustrating an example configuration of an image management system 1 according to an embodiment of the disclosed technology. The image management system 1 includes an image viewing apparatus 10 and an image server 20. The image server 20 is a server computer including a storage medium for storing inspection images acquired in an inspection process of an industrial product. The inspection step may be, for example, a non-destructive inspection step of determining the presence or absence of a defect in the product by using a radiographic image. That is, the inspection images may be radiographic images.

The image viewing apparatus 10 is a computer having a function of viewing the inspection images stored in the image server 20. The image viewing apparatus 10 is communicably connected to the image server 20 via a network 30. The image viewing apparatus 10 is capable of downloading a desired inspection image from the image server 20 and displaying the desired inspection image on a display 105. The image viewing apparatus 10 may be in the form of, for example, a desktop, notebook, or tablet computer, or may be in the form of a smartphone. The image viewing apparatus 10 is an example of an "information processing apparatus" in the disclosed technology. The image management system 1 including the image viewing apparatus 10 and the image server 20 can be understood as an "information processing apparatus" in the disclosed technology.

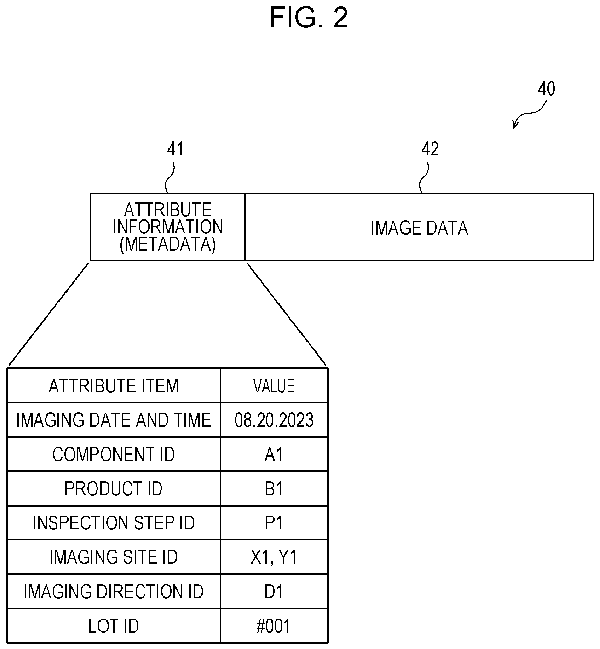

Fig. 2 is a diagram illustrating an example structure of a data file 40 of an inspection image handled by the image management system 1. The data file 40 of the inspection image is constituted by attribute information 41 and image data 42. The image data 42 is pixel data of the inspection image. The attribute information 41 is metadata including a plurality of pieces of information related to the image data 42. The attribute information 41 includes attribute items, namely, an imaging date and time, a component ID (identification) a product ID, an inspection step ID, an imaging site ID, an imaging direction ID, and a lot ID. The imaging date and time is information indicating the date and time of capture of the inspection image. The component ID is information for identifying an individual unit of a component that is a target object included in the inspection image. The product ID is information for identifying an individual unit of a product that is a target object included in the inspection image. The inspection step ID is information for identifying an inspection step in which the inspection image is acquired (captured). The imaging site ID is information for identifying a site of a target object included in the inspection image. The imaging site ID may be information for identifying the relative positional relationship of the target object. The imaging direction ID is information for identifying the imaging direction of the inspection image. For example, the imaging direction ID may be information for identifying the front surface, the rear surface, the top surface, the right side surface, and the left side surface, or may be information for identifying an angle relative to a predetermined direction. The lot ID is information for identifying a manufacturing lot of a target object included in the inspection image. The data file 40 of the inspection image may have, for example, a format compliant with Digital Imaging and Communications in Medicine (DICOM), which is known as a format of medical image data.

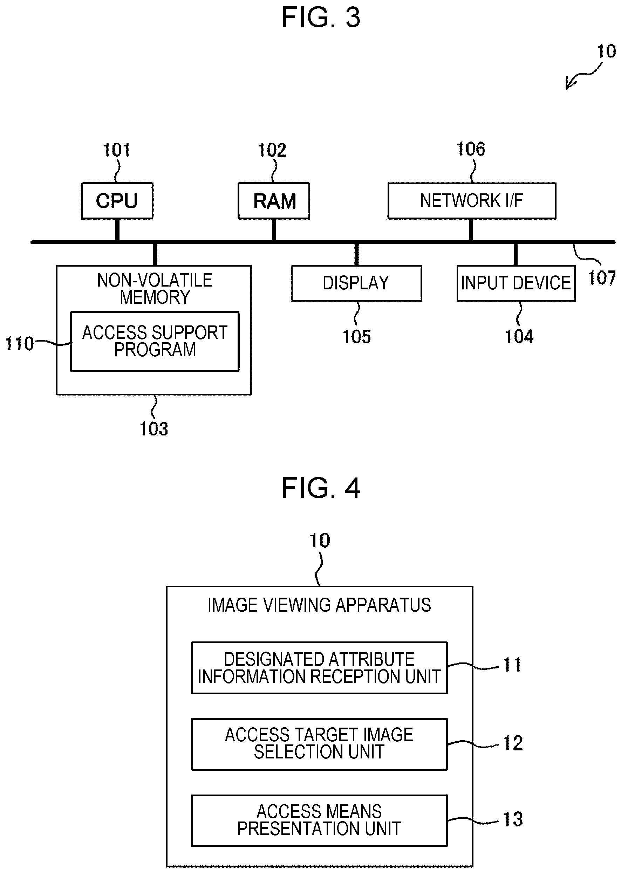

Fig. 3 is a diagram illustrating an example hardware configuration of the image viewing apparatus 10. The image viewing apparatus 10 includes a central processing unit (CPU) 101, a random access memory (RAM) 102, a non-volatile memory 103, an input device 104, the display 105, and a network interface 106. These hardware elements are connected to a bus 107.

The display 105 is, for example, a liquid crystal display or a light emitting diode (LED) display. The input device 104 includes, for example, a keyboard and a mouse, and may include a proximity input device such as a touch panel display, and an audio input device such as a microphone. The network interface 106 is an interface for connecting the image viewing apparatus 10 to a network.

The non-volatile memory 103 is a non-volatile storage medium such as a hard disk and a flash memory. The non-volatile memory 103 stores an access support program 110. The RAM 102 is a work memory for the CPU 101 to execute processing. The CPU 101 loads the access support program 110 stored in the non-volatile memory 103 into the RAM 102 and executes a process in accordance with the access support program 110. The CPU 101 is an example of a "processor" in the disclosed technology.

Fig. 4 is a functional block diagram illustrating an example functional configuration of the image viewing apparatus 10. The image viewing apparatus 10 functions as a designated attribute information reception unit 11, an access target image selection unit 12, and an access means presentation unit 13 in response to the CPU 101 executing the access support program 110.

The designated attribute information reception unit 11 receives designated attribute information among pieces of attribute information (an imaging date and time, a component ID, a product ID, an inspection step ID, an imaging site ID, an imaging direction ID, and a lot ID) assigned to an inspection image. The designated attribute information is attribute information that is designated. In the present embodiment, the designated attribute information reception unit 11 receives, as the designated attribute information, attribute information assigned to an inspection image being displayed on the display 105. The designated attribute information reception unit 11 may receive, as the designated attribute information, attribute information having, for example, only some attribute items selected in accordance with a predetermined order of precedence from among the plurality of attribute items (the imaging date and time, the component ID, the product ID, the inspection step ID, the imaging site ID, the imaging direction ID, and the lot ID) constituting the attribute information assigned to the inspection image being displayed on the display 105.

The access target image selection unit 12 selects, as an access target image, an inspection image to which attribute information that is the same as the designated attribute information received by the designated attribute information reception unit 11 is assigned from among the inspection images stored in the image server 20. That is, the access target image selection unit 12 selects, as an access target image, an inspection image to which attribute information including an attribute item having the same value as at least one of the plurality of attribute items (the imaging date and time, the component ID, the product ID, the inspection step ID, the imaging site ID, the imaging direction ID, and the lot ID) constituting the designated attribute information is assigned. The access target image selection unit 12 may select, as an access target image, an inspection image to which some attribute items selected in accordance with a predetermined order of precedence from among the plurality of attribute items constituting the designated attribute information and an attribute item whose value includes attribute information are assigned. The access target image selection unit 12 may select an access target image by, for example, referring to an attribute information list in which pieces of attribute information are listed for all the inspection images stored in the image server 20. The attribute information list is automatically created by the image server 20. The attribute information list is updated each time a new inspection image is stored in the image server 20, and is transmitted to the image viewing apparatus 10. The access target image selection unit 12 may request the image server 20 to perform a process for selecting an access target image. In this case, the access target image selection unit 12 transmits the designated attribute information to the image server 20 and receives a selection result from the image server 20.

The access means presentation unit 13 presents an access means for accessing the access target image selected by the access target image selection unit 12. The access means may be, for example, a hyperlink for accessing the access target image. For example, the access means presentation unit 13 may cause the display 105 to display, as an access means, a character string indicating a file name or a uniform resource locator (URL) of the access target image or a thumbnail of the access target image with a hyperlink embedded therein. The access means presentation unit 13 may generate access means by, for example, referring to a URL list in which URLs are listed for all the inspection images stored in the image server 20. The URL list is automatically generated by the image server 20. The URL list is updated each time a new inspection image is stored in the image server 20, and is transmitted to the image viewing apparatus 10. The access means presentation unit 13 may request the image server 20 to generate access means.

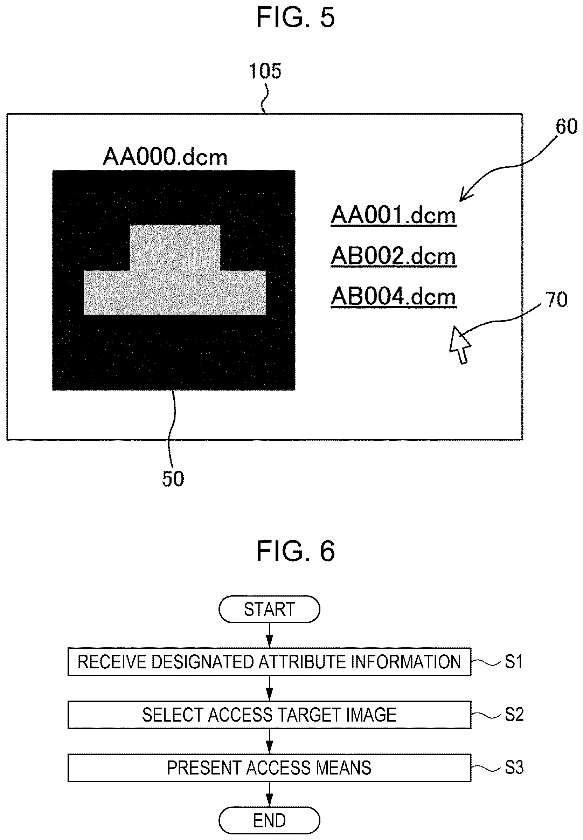

Fig. 5 is a diagram illustrating an example of the presentation form of access means. In the example illustrated in Fig. 5, an inspection image 50 (file name: AA000.dcm) being displayed on the display 105 is downloaded from the image server 20 by the user. The designated attribute information reception unit 11 receives, as designated attribute information, attribute information assigned to the inspection image 50 being displayed on the display 105. The access target image selection unit 12 selects, as an access target image, an inspection image to which attribute information that is the same as the designated attribute information, which is attribute information assigned to the inspection image 50 being displayed on the display 105, is assigned. Fig. 5 illustrates an example in which inspection images having file names "AA001.dcm", "AB002.dcm", and "AB004.dcm" are selected as access target images. The access means presentation unit 13 causes the display 105 to display, as access means, respective hyperlinks 60 for accessing the selected access target images. In the example illustrated in Fig. 5, the hyperlinks 60 are embedded in the character strings indicating the respective file names of the access target images. When the user clicks on any of the hyperlinks 60 with a mouse pointer 70, the corresponding access target image is downloaded from the image server 20 and is displayed on the display 105.

Fig. 6 is a flowchart illustrating an example of the flow of a process implemented by the CPU 101 executing the access support program 110. The access support program 110 is executed, for example, in response to the user providing an instruction to start the process by operating the input device 104 when an inspection image from which an access means is to be generated is being displayed on the display 105.

In step S1, the designated attribute information reception unit 11 receives, as designated attribute information, attribute information assigned to the inspection image being displayed on the display 105.

In step S2, the access target image selection unit 12 selects, as an access target image, an inspection image to which attribute information that is the same as the designated attribute information received in step S1 is assigned from among the inspection images stored in the image server 20. That is, the access target image selection unit 12 selects, as an access target image, an inspection image to which attribute information including an attribute item having the same value as at least one of the plurality of attribute items (the imaging date and time, the component ID, the product ID, the inspection step ID, the imaging site ID, and the lot ID) constituting the designated attribute information is assigned.

In step S3, the access means presentation unit 13 presents an access means for accessing the access target image selected in step S3. For example, the access means presentation unit 13 may cause the display 105 to display a character string indicating the file name or URL of the access target image or a thumbnail of the access target image with a hyperlink embedded therein to access the access target image.

As described above, the image viewing apparatus 10 according to an embodiment of the disclosed technology selects, as an access target image, an image to which attribute information that is the same as designated attribute information, which is attribute information that is designated, is assigned from among a plurality of images to each of which attribute information is assigned, and presents an access means for accessing the access target image. The image viewing apparatus 10 receives, as the designated attribute information, attribute information assigned to an image being displayed on the display 105.

At least a portion of the attribute information of the access target image is the same as that of the image being displayed on the display 105, and the access target image is relevant to the image being displayed on the display 105. Accordingly, the access target image is likely to be an image that the user desires to access next after the image being displayed on the display 105. Presenting an access means for accessing such an image facilitates access to an image desired by the user.

### Second Embodiment

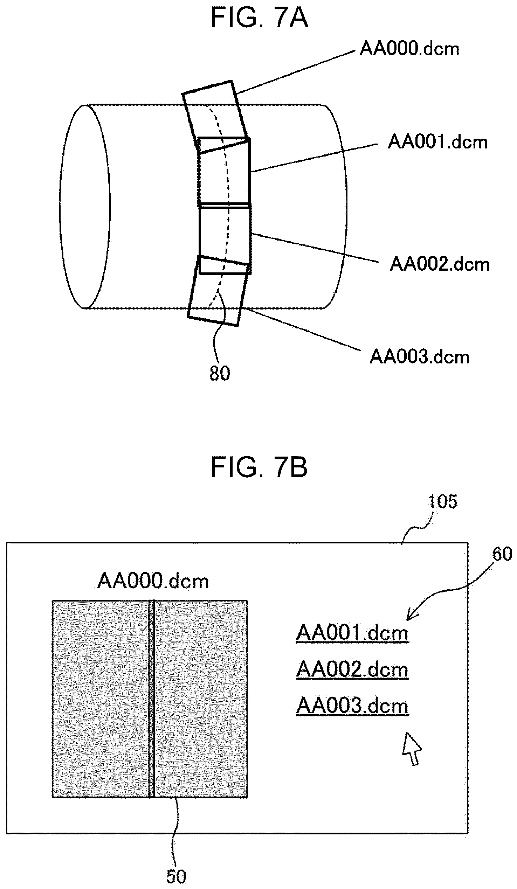

Fig. 7A is a diagram illustrating an example of a method for capturing a radiographic image acquired in non-destructive inspection of a metal product. In non-destructive inspection, when a target object has a large size, inspection images are acquired a plurality of times with the imaging site altered to cover a predetermined inspection range. Fig. 7A illustrates a case where a plurality of inspection images (file names: AA000.dcm, AA001.dcm, AA002.dcm, and AA003.dcm) are acquired along a weld line 80. In this manner, imaging is performed on a plurality of different sites of the same individual unit to acquire a plurality of inspection images, and the user is likely to wish to simultaneously or sequentially view the plurality of acquired inspection images.

The access target image selection unit 12 according to a second embodiment selects a plurality of inspection images including different sites acquired for the same individual unit in the same inspection step, as access target images, based on attribute information. Specifically, when a request for accessing a plurality of inspection images including different sites acquired for the same individual unit in the same inspection step (hereinafter referred to as a first limited access request) is received, the access target image selection unit 12 selects, as the access target images, a plurality of inspection images to which attribute information including attribute items in which the values of the component ID (or product ID) and the inspection step ID are the same and the values of the imaging site ID are different among the plurality of attribute items constituting the designated attribute information is assigned. The first limited access request can be made in response to, for example, the user operating the input device 104.

When the first limited access request is received, the access means presentation unit 13 arranges and presents a plurality of access means, each corresponding to one of the plurality of selected access target images, in the order corresponding to the sites of the target object included in the access target images. Fig. 7B is a diagram illustrating an example of the presentation form of the access means in a case where the first limited access request is received, and corresponds to Fig. 7A. In Fig. 7B, the inspection image 50 (file name: AA000.dcm) being displayed on the display 105 is the uppermost image among the series of inspection images captured along the weld line 80 illustrated in Fig. 7A. The access target image selection unit 12 selects the series of inspection images (file names: AA001.dcm, AA002.dcm, and AA003.dcm) captured along the weld line 80 as access target images. The access means presentation unit 13 causes the display 105 to display respective hyperlinks 60 for accessing the selected access target images (file names: AA001.dcm, AA002.dcm, and AA003.dcm) such that the hyperlinks 60 are arranged in the order corresponding to the sites of the target object included in the images. That is, when a site of a target object included in an access target image is located at a relatively high position, the access means presentation unit 13 arranges the hyperlink 60 corresponding to the image at a relatively high position.

As described above, a plurality of inspection images including different sites acquired for the same individual unit in the same inspection step are selected as access target images, based on attribute information, and a plurality of access means, each corresponding to one of the access target images, are arranged and presented in the order corresponding to the sites of the target object included in the access target images. This can facilitate access to a desired image.

### Third Embodiment

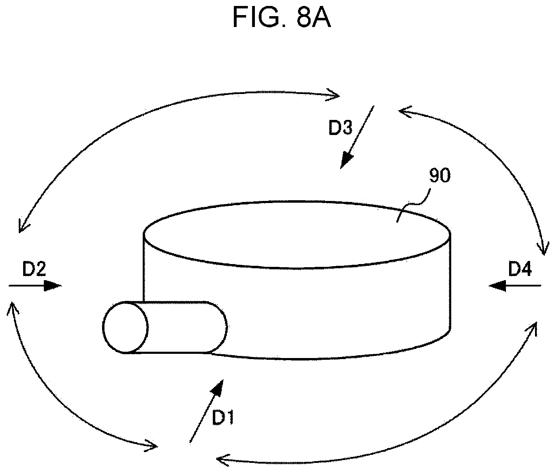

Fig. 8A is a diagram illustrating an example of a method for capturing a radiographic image acquired in non-destructive inspection of a metal product. In non-destructive inspection, when a target object has a complex structure, inspection images are acquired a plurality of times with the imaging direction altered to cover a predetermined inspection range. Fig. 8A illustrates a case where inspection images of a target object 90 are acquired from four directions (D1, D2, D3, and D4). In this manner, a plurality of inspection images are acquired for the same individual unit from different imaging directions, and the user is likely to wish to simultaneously or sequentially view the plurality of acquired inspection images.

The access target image selection unit 12 according to a third embodiment selects a plurality of inspection images acquired for the same individual unit from different imaging directions in the same inspection step, as access target images, based on attribute information. Specifically, when a request for accessing a plurality of inspection images acquired for the same individual unit from different imaging directions in the same inspection step (hereinafter referred to as a second limited access request) is received, the access target image selection unit 12 selects, as the access target images, a plurality of inspection images to which attribute information including attribute items in which the values of the component ID (or product ID) and the inspection step ID are the same and the values of the imaging direction ID are different among the plurality of attribute items constituting the designated attribute information is assigned. The second limited access request can be made in response to the user operating the input device 104.

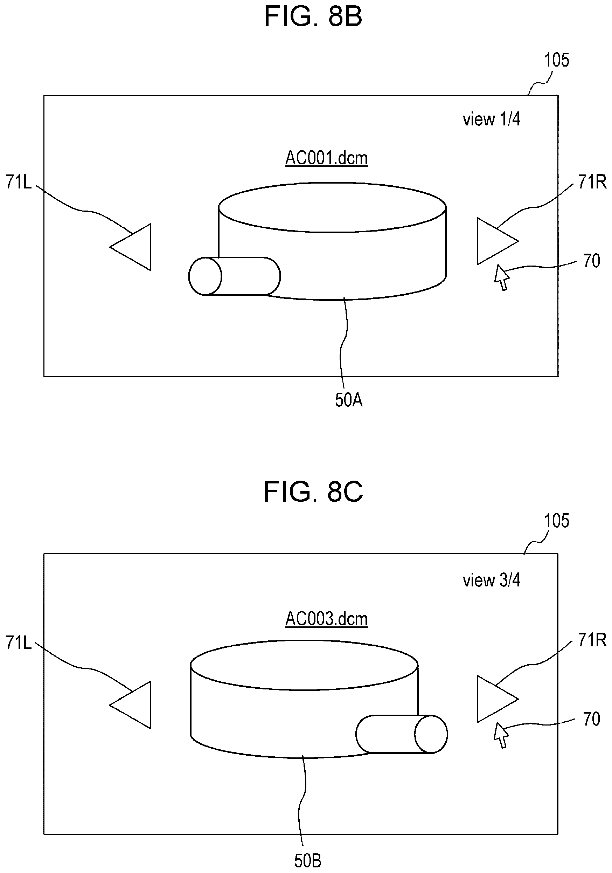

When the second limited access request is received, the access means presentation unit 13 presents access means for accessing the plurality of selected access target images in the order corresponding to the imaging directions. Fig. 8B and Fig. 8C are diagrams illustrating an example of the presentation form of the access means in a case where the second limited access request is received. In Fig. 8B, an inspection image 50A (file name: AC001.dcm) captured from the direction D1 is displayed on the display 105. The access target image selection unit 12 selects a series of inspection images captured from a plurality of imaging directions as access target images. The access means presentation unit 13 causes the display 105 to display, as access means, access buttons 71R and 71L for accessing the selected access target images. When the access button 71R is clicked once using the mouse pointer 70 while the inspection image 50A (file name: AC001.dcm) captured from the direction D1 is being displayed on the display 105, an inspection image captured from the direction D2 is displayed on the display 105. When the access button 71R is further clicked once, as illustrated in Fig. 8C, an inspection image 50B (file name: AC0003.dcm) captured from the direction D3 is displayed on the display 105. In contrast, when the access button 71L is clicked once using the mouse pointer 70 while the inspection image 50A captured from the direction D1 is being displayed on the display 105, an inspection image captured from the direction D4 is displayed on the display 105.

As described above, a plurality of inspection images acquired for the same individual unit from different imaging directions in the same inspection step are selected as access target images, based on attribute information, and access means for accessing the plurality of access target images are presented in the order corresponding to the imaging directions. This can facilitate access to a desired image.

### Fourth Embodiment

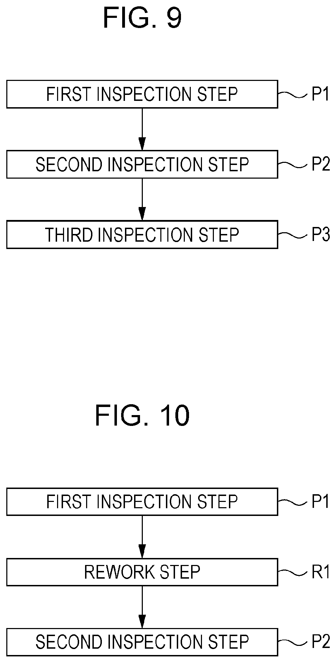

Fig. 9 is a diagram illustrating an example of an inspection process flow performed on the same individual unit of a component or a product. Fig. 9 illustrates an example in which the same individual unit of a component or a product is subjected to a first inspection step P1 at a predetermined timing, followed in sequence by a second inspection step P2 and then by a third inspection step P3. In each inspection step, an inspection image is acquired. In this manner, a plurality of inspection images are acquired for the same individual unit in a plurality of inspection steps performed at different timings, and the user is likely to wish to simultaneously or sequentially view the plurality of acquired inspection images.

The access target image selection unit 12 according to a fourth embodiment selects a plurality of inspection images acquired for the same individual unit in a plurality of inspection steps performed at different timings, as access target images, based on attribute information. Specifically, when a request for accessing a plurality of inspection images acquired for the same individual unit in a plurality of inspection steps performed at different timings (hereinafter referred to as a third limited access request) is received, the access target image selection unit 12 selects, as the access target images, a plurality of inspection images to which attribute information including attribute items in which the values of the component ID (or product ID) are the same and the values of the inspection step ID are different among the plurality of attribute items constituting the designated attribute information is assigned. The third limited access request can be made in response to, for example, the user operating the input device 104.

When the third limited access request is received, the access means presentation unit 13 causes the display 105 to display a plurality of access means, each corresponding to one of the plurality of selected access target images, such that the plurality of access means are arranged in the order corresponding to the order of execution of the inspection steps in which the access target images are acquired.

As described above, a plurality of inspection images acquired for the same individual unit in a plurality of inspection steps performed at different timings are selected as access target images, and a plurality of access means, each corresponding to one of the plurality of selected access target images, are arranged and presented in the order corresponding to the order of execution of the inspection steps in which the access target images are acquired. This can facilitate access to a desired image.

### Fifth Embodiment

Fig. 10 is a diagram illustrating an example of a manufacturing process flow including inspection steps performed on the same individual unit of a component or a product. Fig. 10 illustrates an example in which the same individual unit of a component or a product is subjected to a first inspection step P1 at a predetermined timing, followed by a rework step R1 for repairing a defect found in the first inspection step P1 and, after the rework step R1, a second inspection step P2 for determining the appropriateness of the repair of the defect by rework. In each inspection step, an inspection image is acquired. As described above, a plurality of inspection images are acquired for the same individual unit in the inspection steps performed before and after the rework step, and the user is likely to wish to simultaneously or sequentially view the plurality of acquired inspection images.

The access target image selection unit 12 according to a fifth embodiment selects a plurality of inspection images acquired for the same individual unit in inspection steps performed before and after a specific step (for example, a rework step), as access target images, based on attribute information. Specifically, when a request for accessing a plurality of inspection images acquired for the same individual unit in the inspection steps performed before and after the specific step (hereinafter referred to as a fourth limited access request) is received, the access target image selection unit 12 selects, as the access target images, a plurality of inspection images to which attribute information including attribute items in which the values of the component ID or the product ID are the same and the values of the inspection step ID correspond to the inspection steps performed before and after the specific step (for example, a rework step) among the plurality of attribute items constituting the designated attribute information is assigned. The fourth limited access request can be made in response to, for example, the user operating the input device 104.

When the fourth limited access request is received, the access means presentation unit 13 causes the display 105 to display a plurality of access means, each corresponding to one of the plurality of selected access target images, such that the plurality of access means are arranged in the order corresponding to the order of execution of the inspection steps in which the access target images are acquired.

As described above, a plurality of inspection images acquired for the same individual unit in inspection steps performed before and after a specific step (for example, a rework step) are selected as access target images, and a plurality of access means, each corresponding to one of the plurality of selected access target images, are arranged and presented in the order corresponding to the order of execution of the inspection steps in which the access target images are acquired. This can facilitate access to a desired image.

### Sixth Embodiment

The image inspection is typically performed a plurality of times until a product is completed. In some cases, imaging may be performed on different sites of a single individual unit or from different imaging directions. When a single product is constituted by a plurality of components, the image inspection is performed on each of the plurality of components, and the image inspection is further performed on a finished product into which the plurality of components are assembled. As described above, in a case where the image inspection is performed on each component a plurality of times and on each product a plurality of times, a large number of inspection images are acquired in each inspection step, and a desired inspection image is difficult to access.

The access target image selection unit 12 according to a sixth embodiment selects an inspection image acquired for an individual unit of a first component identified by the designated attribute information (hereinafter referred to as a first component inspection image), an inspection image acquired for an individual unit of a second component to be used in combination with the individual unit of the first component (hereinafter referred to as a second component inspection image), and an inspection image acquired for an individual unit of a product manufactured using the first component and the second component (hereinafter referred to as a product inspection image), as access target images, based on attribute information. It is assumed here that the inspection image being displayed on the display 105 is the first component inspection image.

When a request for accessing a plurality of inspection images including a component inspection image and a product inspection image (hereinafter referred to as a fifth limited access request) is received, the access target image selection unit 12 identifies, based on a component ID of an individual unit of a first component included in the designated attribute information, a product ID of an individual unit of a product manufactured using the individual unit of the first component, and further selects, based on the product ID, a component ID of an individual unit of a second component to be used in combination with the individual unit of the first component. For example, with reference to a product ID and a component ID assigned to a product inspection image, the component IDs of all the individual units of the components constituting the product can be identified. The access target image selection unit 12 selects, as access target images, inspection images to which attribute information including attribute items having the same values as the component ID of the individual unit of the first component included in the designated attribute information, the identified component ID of the individual unit of the second component, and the product ID of the individual unit of the product is assigned. The fifth limited access request can be made in response to, for example, the user operating the input device 104.

When the fifth limited access request is received, the access means presentation unit 13 classifies and presents a plurality of access means, each corresponding to one of the plurality of selected access target images, according to components, according to products, and according to inspection steps. Further, the access means presentation unit 13 arranges and presents the plurality of access means, each corresponding to one of the plurality of access target images, in chronological order of the inspection steps.

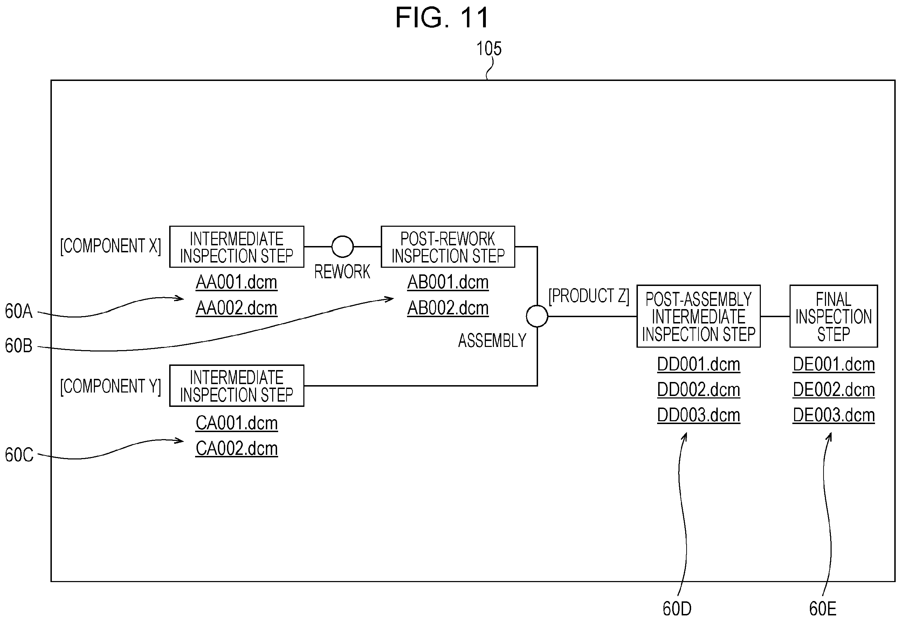

Fig. 11 is a diagram illustrating an example of the presentation form of access means in a case where the fifth limited access request is received. In Fig. 11, for "component X", which is a first component, hyperlinks 60A and 60B serving as access means corresponding to inspection images (file names: AA001.dcm and AA002.dcm) acquired in an intermediate inspection step and inspection images (file names: AB001.dcm and AB002.dcm) acquired in a post-rework inspection step, respectively, are illustrated. Further, for "component Y", which is a second component to be used in combination with the first component, hyperlinks 60C serving as access means corresponding to inspection images (file names: CA001.dcm and CA002.dcm) acquired in the intermediate inspection step are illustrated. Further, for "product Z", which is manufactured using the first component and the second component, hyperlinks 60D and 60E serving as access means corresponding to inspection images (file names: DD001.dcm, DD002.dcm, and DD003.dcm) acquired in a post-assembly intermediate inspection step and inspection images (file names: DE001.dcm, DE002.dcm, and DE003.dcm) acquired in a final inspection step, respectively, are illustrated. The hyperlinks 60A to 60E are displayed on the display 105 as the respective access means corresponding to the inspection images described above such that the hyperlinks 60A to 60E are classified according to components, according to products, and according to inspection steps and arranged in chronological order of the inspection steps.

As described above, an inspection image acquired for an individual unit of a first component identified by the designated attribute information, an inspection image acquired for an individual unit of a second component to be used in combination with the individual unit of the first component, and an inspection image acquired for an individual unit of a product manufactured using the first component and the second component are identified as access target images, and a plurality of access means, each corresponding to one of the plurality of access target images, are classified according to components and according to inspection steps. Further, the plurality of access means are arranged and presented in chronological order of the inspection steps. This can facilitate access to a desired image.

In the foregoing description, as an example, the inspection image being displayed on the display 105 is the first component inspection image. When the inspection image being displayed on the display 105 is a product inspection image, the following process is performed. That is, the access target image selection unit 12 selects an inspection image acquired for an individual unit of a product identified by the designated attribute information and inspection images acquired for respective individual units of a plurality of components constituting the individual unit of the product, as access target images, based on attribute information.

### Seventh Embodiment

In the second to sixth embodiments described above, as an example, the user makes a limited access request to limit inspection images to be identified as access target images. In the present embodiment, in contrast, inspection images to be identified as access target images are limited by priorities set in attribute information. That is, priorities are set for a plurality of attribute items constituting the attribute information. The priorities can be set by the user. The access target image selection unit 12 selects access target images based on the priorities set in the attribute information. The priorities may be the order of precedence.

The access target image selection unit 12 extracts some attribute items having relatively high priorities from among the plurality of attribute items (the imaging date and time, the component ID, the product ID, the inspection step ID, the imaging site ID, the imaging direction ID, and the lot ID) constituting the designated attribute information. The attribute items having a relatively high priority may be attribute items having priorities greater than or equal to a threshold value. The access target image selection unit 12 selects, as an access target image, an inspection image to which at least one of the extracted attribute items and attribute information including the attribute item are assigned. An attribute item having a relatively low priority among the plurality of attribute items constituting the designated attribute information is not taken into account in the selection of an access target image. In the image viewing apparatus 10 according to the present embodiment, it is possible to prevent the number of access target images from increasing. This can facilitate access to a desired image.

### Eighth Embodiment

In the seventh embodiment described above, an access target image is selected based on the priorities set in the attribute information. However, the presentation forms of a plurality of access means, each corresponding to one of a plurality of access target images, may be changed according to the priorities.

As an example, consideration is given to a case where attribute information assigned to an inspection image [#1] being displayed on the display 105 is used to identify three inspection images [#2], [#3], and [#4] as access target images. The inspection image [#1] is an inspection image of an individual unit A1 of a component A captured in the first inspection step from the direction D1. The attribute information of the inspection image [#1] includes <component ID: A1>, <inspection step ID: P1>, and <imaging direction ID: D1>. The inspection image [#2] is an inspection image of the individual unit A1 of the component A captured in the first inspection step from the direction D2. The attribute information of the inspection image [#2] includes <component ID: A1>, <inspection step ID: P1>, and <imaging direction ID: D2>. The inspection image [#3] is an inspection image of the individual unit A1 of the component A captured in the second inspection step from the direction D1. The attribute information of the inspection image [#3] includes <component ID: A1>, <inspection step ID: P2>, and <imaging direction ID: D1>. The inspection image [#4] is an inspection image of the individual unit A1 of the component A captured in the second inspection step from the direction D2. The attribute information of the inspection image [#4] includes <component ID: A1>, <inspection step ID: P2>, and <imaging direction ID: D2>.

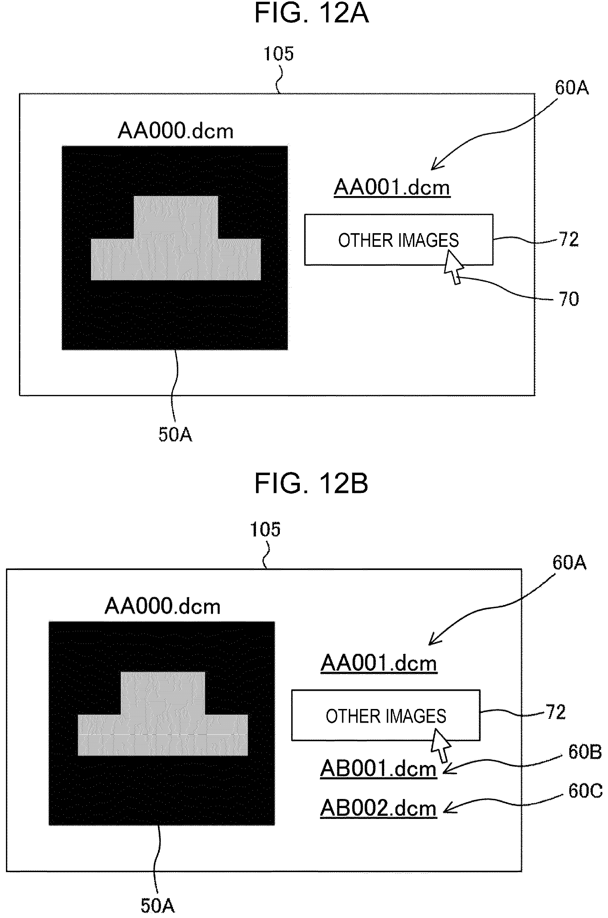

Figs. 12A and 12B are diagrams illustrating examples of the presentation form of access means in a case where a relatively high priority is set to the "inspection step ID" among the plurality of attribute items constituting the attribute information in the case described above. The access means presentation unit 13 presents the access means corresponding to the inspection image [#2] (file name: AA001.dcm), which is the access target image to which attribute information including the same value as the value "P1" of the inspection step ID, which is an attribute item having a relatively high value among the pieces of attribute information assigned to the inspection image [#1] 50A (file name: AA000.dcm) being displayed on the display 105 is assigned, in a manner different from that of the access means corresponding to the other access target images, namely, the inspection image [#3] (file name: AB001.dcm) and the inspection image [#4] (file name: AB002.dcm).

As illustrated in Fig. 12A, the access means presentation unit 13 causes the display 105 to display the inspection image [#1] 50A (file name: AA000.dcm) and a hyperlink 60A serving as the access means corresponding to the inspection image [#2] (file name: AA001.dcm). The access means presentation unit 13 hides the access means corresponding to the inspection images [#3] and [#4], and causes the display 105 to display an icon 72 for displaying the hidden access means. When the user clicks on the icon 72 using the mouse pointer 70, as illustrated in Fig. 12B, hyperlinks 60B and 60C serving as the access means corresponding to the inspection images [#3] and [#4], respectively, are displayed.

As described above, the presentation forms of a plurality of access means, each corresponding to one of a plurality of access target images, are changed according to the priorities set in the attribute information. This can guide the user to preferentially access a specific access target image. According to the example described above, it is possible to guide the user to preferentially access the inspection image [#2] acquired in the same inspection step as the inspection step in which the inspection image [#1] being displayed on the display 105 is acquired and from an imaging direction different that of from the inspection image [#1].

While the embodiments described above provide, as an example, a configuration in which the designated attribute information reception unit 11 receives, as designated attribute information, attribute information assigned to an inspection image being displayed on the display 105, the disclosed technology is not limited to this configuration. The designated attribute information reception unit 11 may receive a designation input of attribute information to be handled as designated attribute information. The designation input can be performed by the user operating the input device 104. This configuration allows the user to select an access target image even in a state where no inspection image is being displayed on the display 105.

While the embodiments described above provide an example in which the image viewing apparatus 10 and the image server 20 are constituted by separate computers communicably connected to each other, the image viewing apparatus 10 may include the functions of the image server 20. While the embodiments described above provide an example in which the images handled by the image management system 1 are inspection images, any images other than inspection images may be handled.

In the embodiments described above, the hardware structures of processing units that execute various processes, such as the designated attribute information reception unit 11, the access target image selection unit 12, and the access means presentation unit 13, may be implemented using various processors described below. As described above, the various processors described above include a CPU and a GPU, which are general-purpose processors configured to execute software (program) to function as various processing units, and further include a programmable logic device (PLD) that is a processor whose circuit configuration can be changed after manufacturing, such as an FPGA, a dedicated electric circuit that is a processor having a circuit configuration designed exclusively for executing specific processing, such as an application specific integrated circuit (ASIC), and so on.

One processing unit may be constituted by one of these various processors, or may be constituted by a combination of two or more processors of the same type or different types (e.g., a combination of a plurality of FPGAs or a combination of a CPU and an FPGA). Alternatively, a plurality of processing units may be configured by one processor.

Examples of configuring a plurality of processing units by one processor include, first, a form in which, as typified by a computer such as a client and a server, one processor is configured by a combination of one or more CPUs and software and the processor functions as a plurality of processing units. The examples include, second, a form in which, as typified by a system on chip (SoC) or the like, a processor is used that implements the functions of the entire system including a plurality of processing units by one integrated circuit (IC) chip. As described above, the various processing units are configured by using one or more of the various processors described above as a hardware structure.

More specifically, the hardware structure of these various processors may be an electric circuit (circuitry) in which circuit elements such as semiconductor elements are combined.

While the embodiments described above describes an aspect in which the access support program 110 is stored (installed) in the non-volatile memory 103 in advance, this is not intended to be limiting. The access support program 110 may be provided in a form recorded on recording media such as a compact disc read only memory (CD-ROM), a digital versatile disc read only memory (DVD-ROM), and a universal serial bus (USB) memory. Alternatively, in an embodiment, the access support program 110 may be downloaded from an external device via a network. That is, the program (that is, a program product) described in the present embodiment may be provided in the form of a recording medium or may be distributed from an external computer.

In relation to the first to eighth embodiments described above, the following appendices are further disclosed.

### Appendix 1

An information processing apparatus including at least one processor,
the at least one processor being configured to:
select, as an access target image, an image to which attribute information that is the same as designated attribute information is assigned from among a plurality of images to each of which attribute information is assigned, the designated attribute information being attribute information that is designated; and
present access means for accessing the access target image.

### Appendix 2

The information processing apparatus according to appendix 1, wherein
the at least one processor is configured to receive, as the designated attribute information, attribute information assigned to an image being displayed on a display.

### Appendix 3

The information processing apparatus according to appendix 1, wherein
the at least one processor is configured to receive an input of designation of attribute information as the designated attribute information.

### Appendix 4

The information processing apparatus according to any one of appendices 1 to 3, wherein
the plurality of images are inspection images acquired in an inspection step performed on a target object included in the images, and
the attribute information includes information for identifying an inspection step in which the images are acquired.

### Appendix 5

The information processing apparatus according to appendix 4, wherein
the attribute information further includes at least one of information for identifying an individual unit of a component or a product that is the target object, information for identifying an individual unit of a product manufactured using a component that is the target object, information for identifying respective individual units of a plurality of components constituting a product that is the target object, information for identifying a manufacturing lot of a component or a product that is the target object, information for identifying a site of the target object, information for identifying an imaging direction of the images, or an imaging date of the images.

### Appendix 6

The information processing apparatus according to appendix 5, wherein
the at least one processor is configured to select a plurality of inspection images including different sites acquired for the same individual unit in the same inspection step, as access target images each being the access target image, based on the attribute information.

### Appendix 7

The information processing apparatus according to appendix 6, wherein
the at least one processor is configured to arrange and present a plurality of the access means, each corresponding to one of a plurality of the access target images, in an order corresponding to sites of a target object included in the access target images.

### Appendix 8

The information processing apparatus according to any one of appendices 5 to 7, wherein
the at least one processor is configured to select a plurality of inspection images acquired for the same individual unit from different imaging directions in the same inspection step, as access target images each being the access target image, based on the attribute information.

### Appendix 9

The information processing apparatus according to appendix 8, wherein
the at least one processor is configured to present the access means for accessing a plurality of the access target images in an order corresponding to the imaging directions.

### Appendix 10

The information processing apparatus according to any one of appendices 5 to 9, wherein
the at least one processor is configured to select a plurality of inspection images acquired for the same individual unit in a plurality of inspection steps performed at different timings, as access target images each being the access target image, based on the attribute information.

### Appendix 11

The information processing apparatus according to any one of appendices 5 to 10, wherein
the at least one processor is configured to select a plurality of inspection images acquired for the same individual unit in inspection steps performed before and after a specific step, as access target images each being the access target image, based on the attribute information.

### Appendix 12

The information processing apparatus according to any one of appendices 5 to 11, wherein
the at least one processor is configured to select each of an inspection image acquired for an individual unit of a first component identified by the designated attribute information, an inspection image acquired for an individual unit of a second component to be used in combination with the individual unit of the first component, and an inspection image acquired for an individual unit of a product manufactured using the first component and the second component, as the access target image, based on the attribute information.

### Appendix 13

The information processing apparatus according to any one of appendices 5 to 12, wherein
the at least one processor is configured to select each of an inspection image acquired for an individual unit of a product identified by the designated attribute information and inspection images acquired for respective individual units of a plurality of components constituting the individual unit of the product, as the access target image, based on the attribute information.

### Appendix 14

The information processing apparatus according to appendix 12 or 13, wherein
the at least one processor is configured to classify and present a plurality of the access means, each corresponding to one of a plurality of the access target images, according to components and according to inspection steps.

### Appendix 15

The information processing apparatus according to appendix 14, wherein
the at least one processor is configured to arrange and present the plurality of access means, each corresponding to one of the plurality of access target images, in chronological order of the inspection steps.

### Appendix 16

The information processing apparatus according to any one of appendices 1 to 15, wherein
the at least one processor is configured to select the access target image based on a priority set in the attribute information.

### Appendix 17

The information processing apparatus according to any one of appendices 1 to 15, wherein
the at least one processor is configured to change a presentation form of a plurality of access means, each corresponding to one of a plurality of the access target images, according to a priority set in the attribute information.

### Appendix 18

An information processing method including processing executed by at least one processor that an information processing apparatus has, the processing including:
selecting, as an access target image, an image to which attribute information that is the same as designated attribute information is assigned from among a plurality of images to each of which attribute information is assigned, the designated attribute information being attribute information that is designated; and
presenting access means for accessing the access target image.

### Appendix 19

A program for causing at least one processor that an information processing apparatus has to execute processing including:
selecting, as an access target image, an image to which attribute information that is the same as designated attribute information is assigned from among a plurality of images to each of which attribute information is assigned, the designated attribute information being attribute information that is designated; and
presenting access means for accessing the access target image.

### Appendix 20

An information display device for causing a display to display access means for accessing an image to which attribute information that is the same as designated attribute information is assigned among a plurality of images to each of which attribute information is assigned, the designated attribute information being attribute information that is designated.

### Appendix 21

An information display method for displaying, on a display, access means for accessing an image to which attribute information that is the same as designated attribute information is assigned among a plurality of images to each of which attribute information is assigned, the designated attribute information being attribute information that is designated.

The disclosure of JP2022-144437 filed on September 12, 2022 is incorporated herein by reference in its entirety. All publications, patent applications, and technical standards mentioned herein are incorporated herein by reference to the same extent as if each individual publication, patent application, and technical standard was specifically and individually indicated to be incorporated by reference.

## Claims

1. An information processing apparatus comprising at least one processor,
the at least one processor being configured to:
select, as an access target image, an image to which attribute information that is the same as at least a portion of designated attribute information is assigned from among a plurality of images to each of which attribute information is assigned, the designated attribute information being attribute information that is designated; and
present access means for accessing the access target image.

2. The information processing apparatus according to claim 1, wherein
the at least one processor is configured to receive, as the designated attribute information, at least a portion of attribute information assigned to an image being displayed on a display.

3. The information processing apparatus according to claim 1, wherein
the at least one processor is configured to receive an input of designation of attribute information as the designated attribute information.

4. The information processing apparatus according to claim 1, wherein
the plurality of images are inspection images acquired in an inspection step performed on a target object included in the images, and
the attribute information includes information for identifying an inspection step in which the images are acquired.

5. The information processing apparatus according to claim 4, wherein
the attribute information further includes at least one of information for identifying an individual unit of a component or a product that is the target object, information for identifying an individual unit of a product manufactured using a component that is the target object, information for identifying respective individual units of a plurality of components constituting a product that is the target object, information for identifying a manufacturing lot of a component or a product that is the target object, information for identifying a site of the target object, information for identifying an imaging direction of the images, or an imaging date of the images.

6. The information processing apparatus according to claim 5, wherein
the at least one processor is configured to select a plurality of inspection images including different sites acquired for the same individual unit in the same inspection step, as access target images each being the access target image, based on the attribute information.

7. The information processing apparatus according to claim 6, wherein
the at least one processor is configured to arrange and present a plurality of the access means, each corresponding to one of a plurality of the access target images, in an order corresponding to sites of a target object included in the access target images.

8. The information processing apparatus according to claim 5, wherein
the at least one processor is configured to select a plurality of inspection images acquired for the same individual unit from different imaging directions in the same inspection step, as access target images each being the access target image, based on the attribute information.

9. The information processing apparatus according to claim 8, wherein
the at least one processor is configured to present the access means for accessing a plurality of the access target images in an order corresponding to the imaging directions.

10. The information processing apparatus according to claim 5, wherein
the at least one processor is configured to select a plurality of inspection images acquired for the same individual unit in a plurality of inspection steps performed at different timings, as access target images each being the access target image, based on the attribute information.

11. The information processing apparatus according to claim 5, wherein
the at least one processor is configured to select a plurality of inspection images acquired for the same individual unit in inspection steps performed before and after a specific step, as access target images each being the access target image, based on the attribute information.

12. The information processing apparatus according to claim 5, wherein
the at least one processor is configured to select each of an inspection image acquired for an individual unit of a first component identified by the designated attribute information, an inspection image acquired for an individual unit of a second component to be used in combination with the individual unit of the first component, and an inspection image acquired for an individual unit of a product manufactured using the first component and the second component, as the access target image, based on the attribute information.

13. The information processing apparatus according to claim 5, wherein
the at least one processor is configured to select each of an inspection image acquired for an individual unit of a product identified by the designated attribute information and inspection images acquired for respective individual units of a plurality of components constituting the individual unit of the product, as the access target image, based on the attribute information.

14. The information processing apparatus according to claim 12 or 13, wherein
the at least one processor is configured to classify and present a plurality of the access means, each corresponding to one of a plurality of the access target images, according to components and according to inspection steps.

15. The information processing apparatus according to claim 14, wherein
the at least one processor is configured to arrange and present the plurality of access means, each corresponding to one of the plurality of access target images, in chronological order of the inspection steps.

16. The information processing apparatus according to any one of claims 1 to 5, wherein
the at least one processor is configured to select the access target image based on a priority set in the attribute information.

17. The information processing apparatus according to any one of claims 1 to 5, wherein
the at least one processor is configured to change a presentation form of a plurality of access means, each corresponding to one of a plurality of the access target images, according to a priority set in the attribute information.

18. An information processing method comprising processing executed by at least one processor that an information processing apparatus has, the processing comprising:
selecting, as an access target image, an image to which attribute information that is the same as designated attribute information is assigned from among a plurality of images to each of which attribute information is assigned, the designated attribute information being attribute information that is designated; and
presenting access means for accessing the access target image.

19. A program for causing at least one processor that an information processing apparatus has to execute processing comprising:
selecting, as an access target image, an image to which attribute information that is the same as designated attribute information is assigned from among a plurality of images to each of which attribute information is assigned, the designated attribute information being attribute information that is designated; and
presenting access means for accessing the access target image.

20. An information display device for causing a display to display access means for accessing an image to which attribute information that is the same as designated attribute information is assigned among a plurality of images to each of which attribute information is assigned, the designated attribute information being attribute information that is designated.

21. An information display method for displaying, on a display, access means for accessing an image to which attribute information that is the same as designated attribute information is assigned among a plurality of images to each of which attribute information is assigned, the designated attribute information being attribute information that is designated.
